# EUROPEAN PATENT APPLICATION

(11) **EP 4 060 524 A1**
(43) Date of publication of application: **21.09.2022**
(21) Application number: 21173330.8
(22) Date of filing: 11.05.2021
(51) Int. Cl.: G06F 16/955

(54) **A METHOD OF STORING AND SHARING A VEHICLE OR A REAL ESTATE INFORMATION**

(30) Priority: 19.03.2021 IT 202100006674
(71) Applicant: Carchain S.r.l., 34124 Trieste TS (IT)
(72) Inventor: Espindola, Lisandro, Trieste TS (IT)
(74) Representative: Perani & Partners S.p.A.

(57) **Abstract**

The present invention relates to a method of storing and sharing vehicle or estate information, comprising at least the following steps: - creating a user account (175A) on a network (125), the user account (175A) is connected to a user space (175B) configured to register and file at least multimedia content (180), vehicle or estate information (185), and contact data (200) of a vehicle or estate owner; - receiving the vehicle or estate information (185), one or more multimedia contents (180) and contact data (200) of a vehicle or estate owner from a first device (105A) associated with a first user; - storing at least vehicle or estate information (185), multimedia contents (180) and contact data (200) of a vehicle or estate owner in the user space (175B) associated with the user account (175A); - generating a scannable code (195); - linking the scannable code (195) to the user account (175A), to the vehicle or estate information (185), to the multimedia contents (180) and to the contact data (200) of a vehicle or estate owner; - tracking parameters related to each scan of the scannable code (195), view of the vehicle or estate information (185) or of multimedia contents (180) or of contact data (200) of the vehicle or estate owner and response to the first user by a second user.

## Description

### Technical field

The present invention relates to a method of storing and sharing a vehicle or a real estate information, multimedia contents or contact data of the vehicle or real estate owner using scannable codes, such as QR codes, barcodes, and NFC.

### Background

It is well known in the state of the art that users use web platforms to store and share vehicle or real estate information.

In particular, a first user creates a user account on the known-type web platform and sends to the operator of the same web platform vehicle or real estate information, multimedia contents and contact data of the vehicle or real estate owner.

In the event that the first user wishes to share the data shared with the operator of the known-type web platform with a second user, these data are made available for viewing by the second user. In particular, the known-type method for storing and sharing vehicle or real estate information, multimedia contents and contact data of the vehicle or real estate owner requires the second user to perform a search on the known-type web platform. Once the search has been carried out, the second user has to extrapolate the data of his interest from the results of the same search.

### Problem of the prior art

Searching on the known-type web platform takes a lot of time for the second user. In fact, the second user may not have enough data available to search for a specific vehicle or real estate or to effectively extrapolate all the data he needs from the search.

Vehicle or real estate information, multimedia contents and contact data of the vehicle or real estate owner can only be shared and searched within the web platform. In fact, if the first user wishes to share the data sent to the operator of the known-type web platform, with a second user, he would have to have direct contact with the second user and personally redirect the latter to the same web platform or wait for the same second user to search for his information on the web platform.

### Summary of the invention

Within this context, the technical task underlying the present invention is to provide a method which overcomes the drawbacks of the prior art.

In particular, it is the object of the present invention to propose a method that facilitates the sharing of vehicle or real estate information, multimedia contents and contact data of the vehicle or real estate owner.

It is also an object of the present invention to propose a method that reduces the time required by the second user to search for data of interest on the web platform.

The defined technical task and the specified aims are substantially achieved by the method, comprising the technical characteristics set forth in one or more of the appended claims.

### Advantages of the invention

The present invention solves the technical problem. It is possible to realise a method that allows a second user to view vehicle or real estate information, multimedia contents or the contact data of the vehicle or real estate owner without searching within the web platform and in a fast way.

It is also possible to realise a method that allows the first user to direct a second user to vehicle or real estate information, multimedia contents or the contact data of the vehicle or real estate owner effectively and without the two users having direct contact.

### BRIEF DESCRIPTION OF THE DRAWINGS

Further characteristics and advantages of the present invention will become more apparent from the approximate and thus non-limiting description of a preferred, but not exclusive, embodiment of a method, as illustrated in the accompanying drawings, of which:

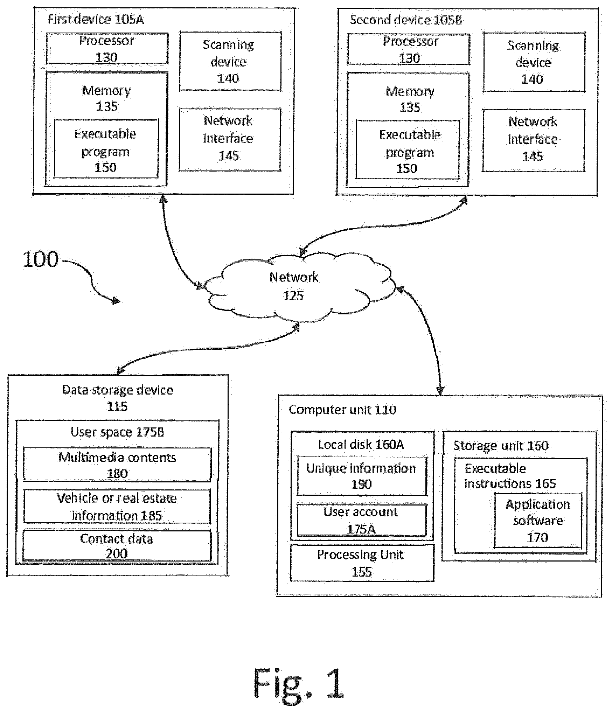

- figure 1 shows a schematic diagram of a processing environment suitable for performing the method object of the present invention;
- figure 2 shows a step of the method object of the present invention.

### DETAILED DESCRIPTION

Referring in particular to the attached figures, number 100 denotes a processing environment. The processing environment 100 comprises a first device 105A and a second device 105B, a computer unit 110, a data storage device 115 and a network 125. The components of the processing environment 100 communicate with each other via the network 125. The network 125 can for example be an internet network or a mobile network.

Preferably, the computer unit 110 and the data storage device 115 are combined. Still preferably, the computer unit 110 and the data storage device 115 are implemented in a web server or a cloud computing network.

Again preferably, said computer unit 110 comprises a processing unit 155, a storage unit 160 and a local disk 160A configured for storage. Such storage unit 160 comprises instructions 165 that are executable by the processing unit 155 of the computer unit 110. In addition, executable instructions 165 comprise an application software 170. The processing unit 155 of the computer unit 110 executes executable instructions 165 to perform the method object of the present invention and described below.

The first device 105A and the second device 105B are configured to allow a first user and a second user, respectively, to interact with the processing environment 100. Preferably, the first device 105A is associated with the first user and the second device 105B is associated with the second user. The first device 105A will be described in detail. It should be noted that every characteristic belonging to the first device 105A, which will be described in the present description, is also specific to the second device 105B.

The first device 105A comprises a processor 130, a memory 135, a scanning device 140 and a network interface 145. The processor 130 of the first device 105A is configured to execute instructions that are stored in the memory 135 of the first device 105A. An executable program 150 is stored in the memory 135 of the first device 105A. Preferably, the executable program 150, when executed by the processor 130 of the first device 105A enables the first device 150A to perform one or more of the steps of the method object of the present invention. The first 105A and the second 105B device are configured to use the network 125 via the network interface 145.

Preferably, the scanning device 140 is configured to scan a scannable code 195 incorporating unique information 190. Such unique information 190 of the scannable code 195 is stored in the computer unit 110. Still preferably, such unique information 190 is stored on the local disk 160A of the computer unit 110.

Again preferably, the scanning device 140 comprises a camera or an infrared reader or an NFC reader in order to be able to scan the scannable code 195. Still preferably, the executable program 150 of the first device 105A or the second device 105B analyses the scan obtained from the scanning device 140 to retrieve the unique information 190 embedded in the scannable code 195.

The method comprises the step of creating a user account 175A on the network 125. Preferably, the first user via the computer unit 110 creates the user account 175A. Still preferably, the user account 175A is stored using the blockchain technology or a cloud-based database or a combination of the two. Again preferably, the user account 175A is stored on the local disk 160A of the computer unit 110. The user account 175A is linked to a user space 175B configured to record and store multimedia contents 180, vehicle or real estate information 185 and contact data 200 of a vehicle or real estate owner.

Furthermore, the method comprises the step of receiving vehicle or real estate information 185, one or more multimedia contents 180 and the contact data 200 of a vehicle or real estate owner from the first device 105A associated with the first user. Preferably, the first user after creating the user account 175A sends vehicle or real estate information 185, one or more multimedia contents 180 and contact data 200 of a vehicle or real estate owner via the first device 105A to the computer unit 110 via the network 125. The vehicle information 185, for example, can be type of vehicle, manufacturer, model, license plate and more. The real estate information 185, for example, can be type of the real estate, location, floor plan, number of rooms and more. Some examples of multimedia contents 180 are photographs, videos and certificates of the vehicle or real estate. The contact data 200 of a vehicle or real estate owner comprise, for example, an email address or a telephone number or postal address.

The method further comprises the step of storing at least vehicle or real estate information 185, multimedia contents 180 and contact data 200 of a vehicle or real estate owner in the user space 175B associated with the user account 175A. Preferably the user space 175B is defined in the data storage device 115. Still preferably, the vehicle or real estate information 185, the multimedia contents 180 and the contact data 200 of a vehicle or real estate owner are stored using the blockchain technology or a cloud-based database or a combination of the two.

The method comprises the step of generating a scannable code 195. This scannable code 195 is a unique code for the vehicle or real estate registered by the first user and is generated by the computer unit 110. In addition, the type of scannable code 195 may be chosen by the first user or by the computer unit 110. Some examples of scannable code types can be barcodes, QR codes or NFC tags. Preferably, the scannable code 195 is a QR code.

Further, the method comprises the step of linking the scannable code 195 to the user account 175A, to the vehicle or real estate information 185, multimedia contents 180, and the contact data 200 of a vehicle or real estate owner. In other words, such a scannable code 195 allows the computer unit 110 to locate on the storage device 115 the vehicle or real estate information 185, the multimedia contents 180 and the contact data 200 of a vehicle or real estate owner. Preferably, the link between the scannable code 195 and the vehicle or real estate information 185, the multimedia contents 180 and the contact data 200 of a vehicle owner is made via the unique information 190 embedded in the scannable code 195. The unique information 190 of the scannable code 195 may include, for example, a URL address that directs to the user space 175B in the data storage device 115. Preferably, the unique information 190 embedded in the scannable code 195 comprises a URL address. Again preferably, this URL address redirects the second user to the vehicle or real estate information 185, multimedia contents 180 and contact data 200 of a vehicle or real estate owner.

The method comprises the step of tracking parameters related to each scan of the scannable code 195, view of the vehicle or real estate information 185 or of multimedia contents 180 or of contact data 200 of the vehicle or real estate owner and response to the first user by the second user. Preferably, the tracked parameters comprise the total number of scans, the time and place of each scan, and the type of the second device 105B scanning the scannable code 195. Again preferably, the step of tracking parameters related to each scan of the scannable code 195, view of the vehicle or real estate information 185 or of multimedia contents 180 or of contact data 200 of the vehicle or real estate owner and response to the first user by the second user is performed for each vehicle or real estate registered in the user space 175B.

In an embodiment of the present invention, the method comprises the further steps of:
- receiving a request of vehicle or real estate information 185 or of multimedia contents 180 or of contact data 200 of a vehicle or real estate owner when the second user scans the scannable code 195 with the second device 105B associated to the second user;
- sending vehicle or real estate information 185 or multimedia contents 180 or contact data 200 of a vehicle or real estate owner to the second device 105B associated to the second user.

Preferably, after scanning the scannable code 195, the second user sends personal details such as for example a name, telephone number or e-mail address over the network 125. Again preferably, such personal details of the second user are used to send vehicle or real estate information 185 or multimedia contents 180 or contact data 200 of a vehicle or real estate owner to the second user.

According to a preferred aspect of the present invention, the method comprises the step of sending a notification to the first user indicating that the second user has scanned the scannable code 195. Preferably, the first user receives a message via the first device 105A indicating that the scannable code 195 has been scanned by the second device 105B associated with the second user.

In addition, the method comprises the step of accessing information related to the second device 105B associated to the second user. Such information related to the second device 105B is included on the second device 105B used to scan the scannable code 195. Preferably, the information related to the second device 105B is used to track the parameters relating to each scan of the scannable code 195 and comprises time and place of the scan and type of the second device 105B.

In an embodiment of the present invention, the method comprises the steps of:
- updating vehicle or real estate information 185 or multimedia contents 180 or contact data 200 of a vehicle or real estate owner;
- sending updated vehicle or real estate information 185 or multimedia contents 180 or contact data 200 of a vehicle or real estate owner to the second device 105B associated to the second user when the second user scans the scannable code 195. Preferably, the first user keeps the data stored in the user space 175B associated with the user account 175A updated over time.

In addition, the method comprises the step of sending a reward or a coupon or an announcement or a combination thereof as a response to the scanning of the scannable code 195.

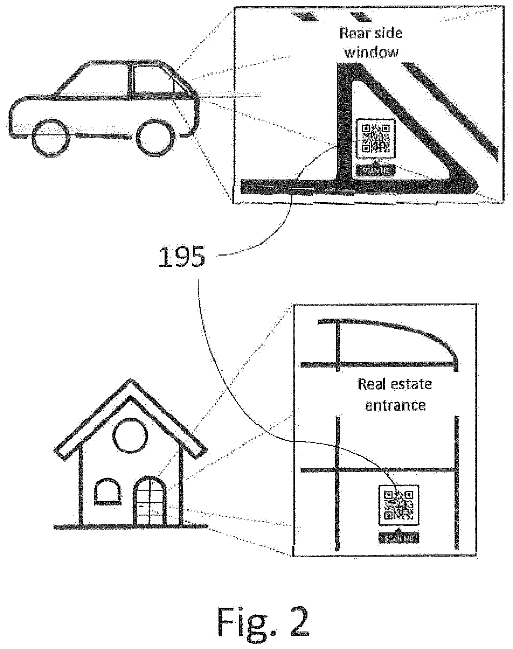

According to an aspect of the present invention, the method comprises the further step of applying the scannable code 195 to the vehicle or to the real estate or to an object close to the vehicle or to the estate. As shown in Figure 2, for example, the scannable code 195 can be applied to the rear window of the vehicle or at the entrance of the real estate. Preferably the scannable code 195 is printed on a physical medium such as a sticker or a sheet of paper. Advantageously, printing the scannable code 195 on a physical medium such as a sticker facilitates the application of the scannable code 195 to the vehicle or real estate. Advantageously, applying the scannable code 195 to the vehicle or real estate facilitates data sharing by the first user.

For example, a passerby seeing the scannable code 195 may be interested in vehicle or real estate information 185, multimedia contents 180 or contact data 200 of the vehicle or real estate owner. In other words, a passerby can constitute the second user and can easily scan the scannable code 195 with the scanning device 140 of the second device 105B to obtain the data shared by the first user without having had contact with the first user. Advantageously, using the scannable code 195 simplifies the procedure for sharing vehicle or real estate information 185, multimedia contents 180 or contact data 200 of the vehicle or real estate owner. Advantageously, by using the scannable code 195, the second user does not need to perform any search on the web platform.

The storage unit 160 readable by the computer unit 110 comprising executable instructions 165 is also an object of the present invention. Such a computer unit 110 is configured to perform the method object of the present invention through executable instructions 165. In particular, the computer unit 110 executes the executable instructions 165 to complete the steps of the described method.

A computer unit 110 comprising the storage unit 160 and the processing unit 155 is also an object of the present invention. This storage unit 160 comprises the executable instructions 165. The processing unit 155 is configured to execute the executable instructions 165 and complete the steps of the described method.

It should be noted that the computer unit 110, the first device 105A and the second device 105B may cooperate to perform the steps of the method described herein. For example, processing-intensive functions such as generating the scannable code 195 may be performed by the computer unit 110, while the view of multimedia contents 180 and the scan of the scannable code 195 may be performed by the first 105A and the second 105B device.

## Claims

1. Method comprising the steps of:
- creating a user account (175A) on a network (125), said user account (175A) being linked to a user space (175B) configured to register and file at least multimedia contents (180), vehicle or estate information (185) and contact data (200) of a vehicle or estate owner;
- receiving said vehicle or estate information (185), one or more multimedia contents (180) and contact data (200) of a vehicle or estate owner from a first device (105A) associated with a first user;
- storing at least vehicle or estate information (185), multimedia contents (180) and contact data (200) of a vehicle or estate owner in the user space (175B) associated with the user account (175A);
- generating a scannable code (195);
- linking the scannable code (195):
- to said user account (175A);
- to said vehicle or estate information (185);
- to said multimedia contents (180);
- to said contact data (200) of a vehicle or estate owner;
- tracking parameters related to each scan of the scannable code (195), view of the vehicle or estate information (185) or of multimedia contents (180) or of contact data (200) of the vehicle or estate owner and response to the first user by a second user.

2. Method, according to claim 1, comprising the further steps of:
- receiving a request of vehicle or estate information (185) or of multimedia contents (180) or of contact data (200) of a vehicle or estate owner when the second user scans the scannable code (195) with a second device (105B) associated to the second user;
- sending vehicle or estate information (185) or multimedia contents (180) or contact data (200) of a vehicle or estate owner to the second device (105B) associated to the second user.

3. Method, according to claim 1, comprising the following steps of:
- sending a notification to the first user when the scannable code (195) is scanned by a second user;
- accessing information related to the second device (105B) associated to the second user, said information related to the second device (105B) associated to the second user being included on the second device (105B) associated to the second user used to scan the scannable code (195).

4. Method, according to claim 1, comprising the following steps of:
- updating vehicle or estate information (185) or multimedia contents (180) or contact data (200) of a vehicle or estate owner;
- sending updated vehicle or estate information (185) or multimedia contents (180) or contact data (200) of a vehicle or estate owner to the second device (105B) associated to the second user when the second user scans the scannable code (195).

5. Method, according to claim 1, comprising the further step of applying the scannable code (195) to the vehicle or to the estate or to an object close to the vehicle or to the estate.

6. Method, according to claim 1, comprising the step of sending a reward or a coupon or an announcement or a combination thereof as a response to the scanning of the scannable code (195).

7. Storage unit (160) readable by a computer unit (110) comprising executable instructions (165), said computer unit (110) being configured to execute the method according to one of the claims 1 to 6 through the executable instructions (165).

8. Computer unit (110), comprising a storage unit (160) and a processing unit (155), said storage unit (160) comprising executable instructions (165), said processing unit (155) being configured to execute the method according to one of the claims 1 to 6 through said executable instructions (165).

9. Method, according to any one of claims 1 to 6, wherein the scannable code (195) is a QR code.
